(19) **Europäisches Patentamt / European Patent Office / Office européen des brevets**

(11) **EP 4 378 996 A1**

(12) # EUROPEAN PATENT APPLICATION
published in accordance with Art. 153(4) EPC

(43) Date of publication:
**05.06.2024 Bulletin 2024/23**

(21) Application number: **23828947.4**

(22) Date of filing: **03.07.2023**

(51) International Patent Classification (IPC):
**C08L 25/12** $^{(2006.01)}$    **C08L 51/04** $^{(2006.01)}$

(86) International application number:
**PCT/KR2023/009306**

(87) International publication number:
**WO 2024/080498 (18.04.2024 Gazette 2024/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.10.2022 KR 20220131044**

(71) Applicant: **LG Chem, Ltd.**
**Yeoui-daero, Youngdungpo-gu**
**Seoul 07336 (KR)**

(72) Inventors:
• **JO, Joon Hwi**
  **Daejeon 34122 (KR)**
• **KIM, Tae Hoon**
  **Daejeon 34122 (KR)**
• **SUNG, Daeun**
  **Daejeon 34122 (KR)**
• **KIM, Hyunmin**
  **Daejeon 34122 (KR)**

(74) Representative: **Plasseraud IP**
**66, rue de la Chaussée d'Antin**
**75440 Paris Cedex 09 (FR)**

(54) **THERMOPLASTIC RESIN COMPOSITION, PREPARATION METHOD THEREFOR AND MOLDED ARTICLE COMPRISING SAME**

(57) The present invention relates to a thermoplastic resin composition, a method of preparing the same, and a molded article including the same. According to the present invention, the present invention has an effect of providing a thermoplastic resin composition having fluidity and weather resistance equal or superior to those of conventional ASA resins and being capable of imparting excellent appearance by suppressing occurrence of flow marks and a molded article including the thermoplastic resin composition.

[FIG. 1]

EP 4 378 996 A1

**Description**

[Technical Field]

[Cross-Reference to Related Application]

This application claims priority to Korean Patent Application No. 10-2022-0131044, filed on October 13, 2022, in the Korean Intellectual Property Office, the disclosure of which is incorporated herein by reference.

The present invention relates to a thermoplastic resin composition, a method of preparing the same, and a molded article including the same, and more particularly, to a thermoplastic resin composition having excellent fluidity and weather resistance and being capable of imparting excellent appearance by suppressing occurrence of flow marks, a method of preparing the same, and a molded article including the same.

[Background Art]

Acrylate-styrene-acrylonitrile graft copolymers (hereinafter referred to as "ASA resins") have good weather resistance, aging resistance, chemical resistance, and processability, and are used in various fields such as automobiles, leisure goods, building materials, and gardening miscellaneous goods.

In recent years, customer preference for molded articles with excellent colorability has increased significantly in consideration of an aesthetically pleasing design. However, when manufacturing a product having a desired shape by injection molding a conventional ASA resin, appearance defects such as flow marks occur. Therefore, there is an increasing demand for ASA resins that can solve these problems, that is, can impart excellent appearance.

Flow marks refer to stripe-like appearance defects that appear due to non-uniform flow of a resin composition in a mold during molding processing.

Shapes of flow marks that occur in injection molding include shapes of irregular thickness, shapes of vinyl records, and wavy stripes such as tiger stripes. In particular, in the case of an ASA injection-molded article, a gap may be generated on a mold surface due to a difference in the solidification rate of a resin composition while a molten resin is cooled. In addition, when the fluidity of a resin composition is unstable, flow marks in the form of repeated wavy stripes may appear due to a difference in transfer on the surface in contact with a mold.

In general, a method of increasing injection temperature and speed is used to suppress occurrence of flow marks. However, this method is difficult to apply because injection conditions are not unified. In addition, a method of optimizing gate thickness and location is also used. However, this method is difficult to apply because a mold design is not unified.

In addition, there is also a method of improving the flow properties of an ASA resin by adding an internal lubricant and an external lubricant to the ASA resin. However, when the above method is used, it is difficult to obtain a clear improvement effect, and low-molecular substances including lubricants may be volatilized and deposited in a mold during injection processing.

[Related Art Documents]

[Patent Documents]

KR 2022-0000554 A

[Disclosure]

[Technical Problem]

Therefore, the present invention has been made in view of the above problems, and it is one object of the present invention to provide a thermoplastic resin composition having excellent fluidity and weather resistance and being capable of imparting excellent appearance by preventing deterioration of surface properties that may occur during molding processing.

It is another object of the present invention to provide a molded article manufactured using the thermoplastic resin composition.

The above and other objects can be accomplished by the present invention described below.

[Technical Solution]

I) In accordance with one aspect of the present invention, provided is a thermoplastic resin composition including 100 parts by weight of a base resin including an acrylate-aromatic vinyl compound-vinyl cyanide compound graft copolymer (A-1) containing acrylate rubber having an average particle diameter of 400 to 600 nm, an acrylate-aromatic vinyl compound-vinyl cyanide compound graft copolymer (A-2) containing acrylate rubber having an average particle diameter of 30 to 200 nm, a heat-resistant resin (B) having a weight average molecular weight of 50,000 to 150,000 g/mol, and an aromatic vinyl compound-vinyl cyanide compound copolymer (C) having a weight average molecular weight of 50,000 to 70,000 g/mol; and 0.5 to 4 parts by weight of an aromatic vinyl compound-vinyl cyanide compound copolymer (D) having a weight average molecular weight of 1,000,000 to 10,000,000 g/mol.
II) According to I), when weights of (A-1), (A-2), (B), and (C) are a, b, c, and d, respectively, a, b, c, and d may satisfy Equation 1 below:

[Equation 1]

$$a \leq d < b \leq c,$$

wherein a is an integer from 5 to 20, b is an integer from 26 to 35, c is an integer from 35 to 60, and d is an integer from 6 to 25.
III) According to I) or II), the base resin may include (A-1), (A-2), (B), and (C) in a weight ratio of 1:2 to 3:4 to 5:1 to 2 ((A-1):(A-2) :(B) :(C)).
IV) According to I) to III), the aromatic vinyl compound-vinyl cyanide compound copolymer (D) may have an intrinsic viscosity (I.V., 25 °C) of 10 dL/g or more.
V) According to I) to IV), the aromatic vinyl compound-vinyl cyanide compound copolymer (D) may have a bulk density of 0.1 to 0.5 g/cm$^3$.
VI) According to I) to V), the aromatic vinyl compound-vinyl cyanide compound copolymer (D) may have a weight average molecular weight of greater than 1,000,000 g/mol.
VII) According to I) to VI), the aromatic vinyl compound-vinyl cyanide compound copolymer (D) may include 50 to 90 % by weight of an aromatic vinyl compound and 10 to 50 % by weight of a vinyl cyanide compound.
VIII) According to I) to VII), based on 100 % by weight in total of all components constituting the base resin, a total amount of (A-1) and (A-2) may be 40 % by weight or less.
IX) According to I) to VIII), the heat-resistant resin (B) may include 60 to 80 % by weight of an $\alpha$-methyl styrene-based monomer and 20 to 40 % by weight of a vinyl cyanide compound.
X) According to I) to IX), based on 100 % by weight in total of the acrylate-aromatic vinyl compound-vinyl cyanide compound graft copolymer (A-1), the acrylate-aromatic vinyl compound-vinyl cyanide compound graft copolymer (A-1) may include 40 to 60 % by weight of acrylate rubber, 25 to 45 % by weight of an aromatic vinyl compound, and 5 to 20 % by weight of a vinyl cyanide compound.
XI) According to I) to X), based on 100 % by weight in total of the acrylate-aromatic vinyl compound-vinyl cyanide compound graft copolymer (A-2), the acrylate-aromatic vinyl compound-vinyl cyanide compound graft copolymer (A-2) may include 40 to 60 % by weight of acrylate rubber, 25 to 45 % by weight of an aromatic vinyl compound, and 5 to 20 % by weight of a vinyl cyanide compound.
XII) According to I) to XI), the aromatic vinyl compound-vinyl cyanide compound copolymer (C) may include 50 to 90 % by weight of an aromatic vinyl compound and 10 to 50 % by weight of a vinyl cyanide compound.
XIII) In accordance with another aspect of the present invention, provided is a thermoplastic resin composition including 100 parts by weight of base resin including 5 to 20 % by weight of an acrylate-aromatic vinyl compound-vinyl cyanide compound graft copolymer (A-1) containing acrylate rubber having an average particle diameter of 400 to 600 nm,

20 to 40 % by weight of an acrylate-aromatic vinyl compound-vinyl cyanide compound graft copolymer (A-2) containing acrylate rubber having an average particle diameter of 30 to 200 nm,
30 to 60 % by weight of a heat-resistant resin (B) having a weight average molecular weight of 50,000 to 150,000 g/mol, and
5 to 30 % by weight of an aromatic vinyl compound-vinyl cyanide compound copolymer (C) having a weight average molecular weight of 50,000 to 70,000 g/mol; and

0.5 to 4 parts by weight of an aromatic vinyl compound-vinyl cyanide compound copolymer (D) having a weight average molecular weight of 1,000,000 to 10,000,000 g/mol,

wherein the base resin includes (A-1), (A-2), (B), and (C) in a weight ratio of 1:2 to 3:4 to 5:1 to 2 ((A-1):(A-2) : (B) : (C)).

XIV) According to XIII), the thermoplastic resin composition may satisfy Equation 3 below:

$$380 \leq \text{melt flow index} \times \text{die swell ratio} \times \text{spiral} \times \text{content of processing aid} \leq 1,400 \qquad \text{[Equation 3]}$$

wherein Equation 3, the melt flow index is a value (unit: g/10 min) measured at 220 °C under a load of 10 kg according to ASTM D1238 for the thermoplastic resin composition, the die swell ratio is a value calculated by Equation 4 below, the spiral is a length (unit: cm) of a specimen obtained by injection at an injection temperature of 300 °C and a mold temperature of 80 °C under a pressure of 500 Kgf using a spiral mold (2.0T) and an injection molding machine (Victory 80, Engel Co.), and the content of processing aid is an amount (parts by weight) of the copolymer (D) based on 100 parts by weight in total of the base resin and the aromatic vinyl compound-vinyl cyanide compound copolymer.

$$[\text{Equation 4}]$$

$$\text{Die swell ratio} = D_{ex} / D_0,$$

wherein $D_0$ is a die diameter of 2 mm, and $D_{ex}$ is a diameter (unit: mm) of a specimen obtained by extrusion at 220 °C under a load of 10 kg using a melt indexer (MI) having a die diameter ($D_0$) of 2 mm.

XV) According to XIII) to XIV), Equation 3 may satisfy a range of 400 to 1,300.

XVI) According to XIII) to XV), the melt flow index may be 6.7 to 13.2 g/10 min.

XVII) According to XIII) to XVI), the die swell ratio may be 1.31 to 1.54.

XVIII) According to XIII) to XVII), the spiral may be 21.1 to 24.4 cm.

XIX) In accordance with still another aspect of the present invention, provided is a method of preparing a thermoplastic resin composition, the method including kneading and extruding, at 200 to 300 °C and 100 to 500 rpm, 100 parts by weight of a base resin including 5 to 20 % by weight of an acrylate-aromatic vinyl compound-vinyl cyanide compound graft copolymer (A-1) containing acrylate rubber having an average particle diameter of 400 to 600 nm, 20 to 40 % by weight of an acrylate-aromatic vinyl compound-vinyl cyanide compound graft copolymer (A-2) containing acrylate rubber having an average particle diameter of 30 to 200 nm, 30 to 60 % by weight of a heat-resistant resin (B) having a weight average molecular weight of 50,000 to 150,000 g/mol, and 5 to 30 % by weight of an aromatic vinyl compound-vinyl cyanide compound copolymer (C) having a weight average molecular weight of 50,000 to 70,000 g/mol; and 0.5 to 4 parts by weight of an aromatic vinyl compound-vinyl cyanide compound copolymer (D) having a weight average molecular weight of 1,000,000 to 10,000,000 g/mol,

wherein the base resin includes (A-1), (A-2), (B), and (C) in a weight ratio of 1:2 to 3:4 to 5:1 to 2 ((A-1) : (A-2) : (B) : (C)).

XX) In accordance with yet another aspect of the present invention, provided is a molded article including the above-described thermoplastic resin composition.

[Advantageous Effects]

According to the present invention, the present invention has an effect of providing a thermoplastic resin composition having fluidity and weather resistance equal or superior to those of conventional ASA resins and being capable of imparting excellent appearance by suppressing occurrence of flow marks.

In particular, the thermoplastic resin composition according to the present invention can be used for automobile exterior parts, as a specific example, side mirror housings, radiator grills, or pillars.

[Description of Drawings]

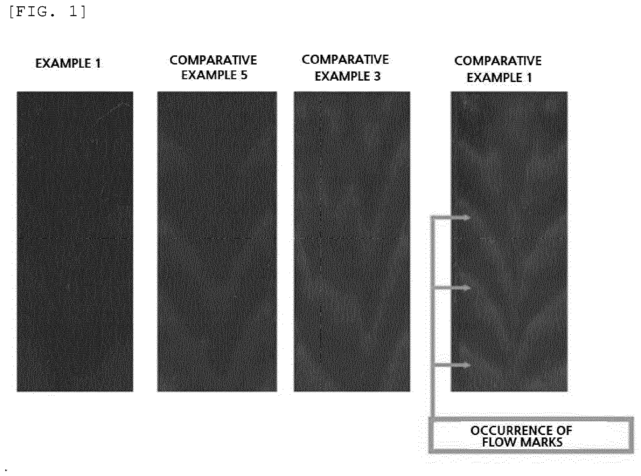

FIG. 1 includes images captured to observe occurrence of flow marks on the surfaces of injection specimens having a size of 40 mm × 200 mm prepared in Example 1 and Comparative Examples 1, 3, and 5.

[Best Mode]

Hereinafter, a thermoplastic resin composition of the present invention, a method of preparing the same, and a molded article including the same will be described in detail.

The present inventors confirmed that, when two or more graft copolymers containing acrylate rubbers having different average particle diameters, a heat-resistant resin, a low-molecular-weight SAN resin, and an ultra-high-molecular-weight SAN resin were included in a predetermined content ratio, due to the synergistic effect of these components, excellent fluidity and weather resistance were obtained, and occurrence of flow marks was suppressed, thereby improving appearance quality. Based on these results, the present inventors conducted further studies to complete the present invention.

A detailed description of the thermoplastic resin composition of the present invention is as follows.

The thermoplastic resin composition of the present invention includes 100 parts by weight of a base resin including an acrylate-aromatic vinyl compound-vinyl cyanide compound graft copolymer (A-1) containing acrylate rubber having an average particle diameter of 400 to 600 nm, an acrylate-aromatic vinyl compound-vinyl cyanide compound graft copolymer (A-2) containing acrylate rubber having an average particle diameter of 30 to 200 nm, a heat-resistant resin (B) having a weight average molecular weight of 50,000 to 150,000 g/mol, and an aromatic vinyl compound-vinyl cyanide compound copolymer (C) having a weight average molecular weight of 50,000 to 70,000 g/mol; and 0.5 to 4 parts by weight of an aromatic vinyl compound-vinyl cyanide compound copolymer (D) having a weight average molecular weight of 1,000,000 to 10,000,000 g/mol.

In this case, fluidity and weather resistance equal or superior to those of conventional ASA resin compositions may be implemented, and excellent appearance may be realized by suppressing occurrence of flow marks.

Hereinafter, the thermoplastic resin composition of the present invention will be described in detail for each component.

## (A-1) Acrylate-aromatic vinyl compound-vinyl cyanide compound graft copolymer containing acrylate rubber having average particle diameter of 400 to 600 nm

The acrylate rubber contained in the graft copolymer (A-1) may have an average particle diameter of 420 to 550 nm, preferably 450 to 520 nm, more preferably 450 to 500 nm. Within this range, mechanical strength such as impact strength may be excellent.

In the present disclosure, average particle diameter may be measured by dynamic light scattering, and specifically, may be measured as an intensity value using a Nicomp 380 particle size analyzer (manufacturer: PSS) in a Gaussian mode. As a specific measurement example, a sample is prepared by diluting 0.1 g of latex (total solids content: 35 to 50 wt%) 1,000 to 5,000-fold with distilled water. Then, the average particle diameter of the sample is measured using a flow cell in auto-dilution in a measurement mode of dynamic light scattering/intensity 300 kHz/intensity-weight Gaussian analysis. At this time, setting values are as follows: temperature: 23 °C; measurement wavelength: 632.8 nm; and channel width: 10 μsec.

For example, based on a total weight of the base resin, the graft copolymer (A-1) may be included in an amount of 5 to 20 % by weight, preferably 7 to 20 % by weight, more preferably 7 to 15 % by weight. Within this range, fluidity and weather resistance equal or superior to those of conventional ASA resin compositions may be implemented. In addition, due to excellent die swell ratio, occurrence of flow marks may be suppressed, and excellent appearance may be realized.

For example, the graft copolymer (A-1) may include 40 to 60 % by weight of acrylate rubber, 25 to 45 % by weight of an aromatic vinyl compound, and 5 to 20 % by weight of a vinyl cyanide compound, preferably 45 to 55 % by weight of acrylate rubber, 30 to 40 % by weight of an aromatic vinyl compound, and 10 to 15 % by weight of a vinyl cyanide compound. Within this range, mechanical strength such as impact strength may be excellent.

In the present disclosure, a polymer including a certain compound means a polymer prepared by polymerizing the compound, and a unit in the polymer is derived from the compound.

In the present disclosure, for example, the alkyl acrylate compound may be an alkyl acrylate containing an alkyl group having 1 to 15 carbon atoms. Preferably, the alkyl acrylate compound may include one or more selected from the group consisting of methyl acrylate, ethyl acrylate, propyl acrylate, butyl acrylate, 2-ethylbutyl acrylate, octyl acrylate, 2-ethylhexyl acrylate, hexyl acrylate, heptyl acrylate, n-pentyl acrylate, and lauryl acrylate, more preferably an alkyl acrylate containing a chain alkyl group having 1 to 4 carbon atoms, still more preferably butyl acrylate.

In the present disclosure, the aromatic vinyl compound may include, for example, one or more selected from the group consisting of styrene, α-methyl styrene, o-methyl styrene, ρ-methyl styrene, m-methyl styrene, ethyl styrene, isobutyl styrene, t-butyl styrene, o-bromostyrene, ρ-bromostyrene, m-bromostyrene, o-chlorostyrene, ρ-chlorostyrene, m-chlorostyrene, vinyltoluene, vinylxylene, fluorostyrene, and vinylnaphthalene, preferably one or more selected from the group consisting of styrene and α-methyl styrene, still more preferably styrene. In this case, due to appropriate fluidity, processability and mechanical properties such as impact resistance may be excellent.

In the present disclosure, for example, the vinyl cyanide compound may include one or more selected from the group consisting of acrylonitrile, methacrylonitrile, ethylacrylonitrile, and isopropylacrylonitrile, preferably acrylonitrile.

For example, the graft copolymer (A-1) may be prepared by emulsion polymerization. In this case, mechanical strength such as impact strength may be excellent.

Emulsion polymerization methods commonly practiced in the art to which the present invention pertains may be used in the present invention without particular limitation. As a specific example, an emulsion graft polymerization method may be used.

### (A-2) Acrylate-aromatic vinyl compound-vinyl cyanide compound graft copolymer containing acrylate rubber having average particle diameter of 30 to 200 nm

For example, the acrylate rubber contained in the graft copolymer (A-2) may have an average particle diameter of 30 to 200 nm, preferably 50 to 180 nm, more preferably 70 to 150 nm, still more preferably 70 to 120 nm. Within this range, excellent impact strength and gloss may be imparted to the finally prepared thermoplastic resin composition.

For example, based on a total weight of the base resin, the graft copolymer (A-2) may be included in an amount of 26 to 35 % by weight, preferably 28 to 35 % by weight, more preferably 28 to 33 % by weight. Within this range, fluidity and weather resistance equal or superior to those of conventional ASA resin compositions may be implemented. In addition, due to excellent die swell ratio, occurrence of flow marks may be suppressed, and excellent appearance may be realized.

For example, the graft copolymer (A-2) may include 40 to 60 % by weight of acrylate rubber, 25 to 45 % by weight of an aromatic vinyl compound, and 5 to 20 % by weight of a vinyl cyanide compound, preferably 45 to 55 % by weight of acrylate rubber, 30 to 40 % by weight of an aromatic vinyl compound, and 10 to 15 % by weight of a vinyl cyanide compound. Within this range, gloss and impact strength may be excellent.

For example, the graft copolymer (A-2) may be prepared by emulsion polymerization. In this case, impact strength and gloss may be excellent.

Emulsion polymerization methods commonly practiced in the art to which the present invention pertains may be used in the present invention without particular limitation. As a specific example, an emulsion graft polymerization method may be used.

The weight ratio (A-1:A-2) of the graft copolymer (A-1) to the graft copolymer (A-2) may be preferably 1:2 or more, more preferably 1:2 to 3, still more preferably 1:2.5 to 1:3. Within this range, fluidity and weather resistance may be maintained above a certain level, and occurrence of flow marks may be suppressed, thereby improving appearance.

In the present disclosure, the weight ratio of A to B means the weight ratio of A:B.

Based on 100 % by weight in total of all components constituting the base resin, a total amount of the graft copolymer (A-1) and the graft copolymer (A-2) may be preferably 40 % by weight or less, more preferably 10 to 40 % by weight, still more preferably 25 to 40 % by weight. Within this range, fluidity and weather resistance may be maintained above a certain level, and occurrence of flow marks may be suppressed, thereby improving appearance.

### (B) Heat-resistant resin having weight average molecular weight of 50,000 to 150,000 g/mol

For example, the heat-resistant resin (B) may have a weight average molecular weight of preferably 50,000 to 150,000 g/mol, more preferably 70,000 to 140,000 g/mol, still more preferably 90,000 to 130,000 g/mol. Within this range, heat resistance may be excellent.

In the present disclosure, weight average molecular weight may be measured using tetrahydrofuran (THF) as an eluate through gel permeation chromatography (GPC, Waters Breeze). In this case, weight average molecular weight is obtained as a relative value to a polystyrene (PS) standard sample. Specific measurement conditions are as follows: solvent: THF, column temperature: 40 °C, flow rate: 0.3 ml/min, sample concentration: 20 mg/ml, injection amount: 5 ul, column model: 1×PLgel 10 um MiniMix-B (250×4.6 mm) + 1×PLgel 10 um MiniMix-B (250×4.6 mm) + 1×PLgel 10 um MiniMix-B Guard (50×4.6 mm), equipment name: Agilent 1200 series system, refractive index detector: Agilent G1362 RID, RI temperature: 35 °C, data processing: Agilent ChemStation S/W, and test method (Mn, Mw and PDI): OECD TG 118.

For example, based on a total weight of the base resin, the heat-resistant resin (B) may be included in an amount of 35 to 60 % by weight, preferably 35 to 55 % by weight, more preferably 38 to 52 % by weight. Within this range, impact resistance, heat resistance, and hardness may be maintained at a certain level. In addition, due to excellent fluidity and die swell ratio, occurrence of flow marks may be suppressed, and appearance may be improved.

In the present disclosure, polymers commonly referred to as heat-resistant resins in the art to which the present invention pertains may be used as the heat-resistant resin of the present invention without particular limitation. Specifically, the heat-resistant resin may refer to a monomer having a higher glass transition temperature (based on polymer) than a styrene monomer, that is, a polymer including a heat-resistant monomer.

For example, the heat-resistant resin (B) may include, as a heat-resistant monomer, one or more selected from the group consisting of an α-methyl styrene-based monomer and a maleimide-based monomer, preferably an α-methyl styrene-based monomer. In this case, heat resistance and physical property balance may be excellent.

For example, the maleimide-based monomer may include one or more selected from the group consisting of maleimide and a derivative thereof, preferably one or more selected from the group consisting of maleimide, N-methyl maleimide, N-ethyl maleimide, N-propyl maleimide, N-isopropyl maleimide, N-butyl maleimide, N-isobutyl maleimide, N-t-butyl maleimide, N-lauryl maleimide, N-cyclohexyl maleimide, N-phenyl maleimide, N-(4-chlorophenyl) maleimide, 2-methyl-N-phenyl maleimide, N-(4-bromophenyl)maleimide, N-(4-nitrophenyl) maleimide, N-(4-hydroxyphenyl) maleimide, N-(4-methoxyphenyl) maleimide, N-(4-carboxyphenyl) maleimide, and N-benzyl maleimide.

For example, the α-methyl styrene-based monomer may include one or more selected from the group consisting of α-methyl styrene and a derivative thereof. In this case, heat resistance may be excellent.

In the present disclosure, the derivative of a certain compound may be preferably a compound in which one or more hydrogens are substituted with a substituent such as an alkyl group having 1 to 10 carbon atoms and a halogen group.

The heat-resistant resin (B) may include preferably 60 to 80 % by weight of an α-methyl styrene-based monomer and 20 to 40 % by weight of a vinyl cyanide compound, more preferably 65 to 75 % by weight of an α-methyl styrene-based monomer and 25 to 35 % by weight of a vinyl cyanide compound. In this case, heat resistance and mechanical properties may be excellent.

As a preferred example the heat-resistant resin (B) may be an α-methyl styrene-vinyl cyanide compound copolymer, as a more preferred example, an α-methyl styrene-acrylonitrile copolymer. In this case, heat resistance may be excellent, and excellent appearance may be realized by suppressing occurrence of flow marks.

The heat-resistant resin (B) may have a glass transition temperature of preferably 110 to 150 °C, more preferably 110 to 140 °C. Within this range, heat resistance may be excellent.

In the present disclosure, the glass transition temperature (Tg) may be measured at a heating rate of 10 °C/min using a differential scanning calorimeter (DSC, Q100, TA Instrument Co.) according to ASTM D3418.

For example, the heat-resistant resin (B) may be prepared by solution polymerization or bulk polymerization. In this case, heat resistance and fluidity may be excellent.

Solution polymerization and bulk polymerization methods commonly practiced in the art to which the present invention pertains may be used in the present invention without particular limitation.

### (C) Aromatic vinyl compound-vinyl cyanide compound copolymer having weight average molecular weight of 50,000 to 70,000 g/mol

The copolymer (C) may have a weight average molecular weight of preferably 50,000 to 70,000 g/mol, more preferably 55,000 to 70,000,000 g/mol, still more preferably 55,000 to 65,000 g/mol. Within this range, by suppressing occurrence of flow marks, excellent appearance may be realized. When the weight average molecular weight exceeds the range, as shown in Comparative Example 7 described later, processability may be poor due to a decrease in melt index.

For example, based on a total weight of the base resin, the copolymer (C) may be included in an amount of 6 to 25 % by weight, preferably 6 to 22 % by weight, more preferably 8 to 22 % by weight. Within this range, impact resistance, heat resistance, and hardness may be maintained at a certain level. In addition, due to excellent fluidity and die swell ratio, occurrence of flow marks may be suppressed, and appearance may be improved.

For example, the copolymer (C) may include an aromatic vinyl compound and a vinyl cyanide compound. In this case, impact resistance may be excellent, and occurrence of flow marks may be suppressed.

As a preferred example, the aromatic vinyl compound-vinyl cyanide compound copolymer may include preferably 50 to 90 % by weight of an aromatic vinyl compound and 10 to 50 % by weight of a vinyl cyanide compound, more preferably 60 to 80 % by weight of an aromatic vinyl compound and 20 to 40 % by weight of a vinyl cyanide compound, still more preferably 70 to 75 % by weight of an aromatic vinyl compound and 25 to 30 % by weight of a vinyl cyanide compound. In this case, due to excellent fluidity and die swell ratio, occurrence of flow marks may be suppressed.

The types of the aromatic vinyl compound and the vinyl cyanide compound included in the copolymer (C) may be the same as the types of the aromatic vinyl compound and the vinyl cyanide compound included in the graft copolymer (A-1) of the present invention.

For example, the copolymer (C) may be prepared by suspension polymerization, emulsion polymerization, solution polymerization, or bulk polymerization. In this case, heat resistance and fluidity may be excellent.

Suspension polymerization, emulsion polymerization, solution polymerization, and bulk polymerization methods commonly practiced in the art to which the present invention pertains may be used in the present invention without particular limitation.

In the present disclosure, in addition to the copolymer (C), it is preferable to exclude the use of a methacrylate-aromatic vinyl compound-vinyl cyanide compound copolymer. In this case, fluidity and weather resistance may be fully implemented, and flow marks may be prevented from forming on the surface of an injection product. However, the present invention is not limited thereto.

## (D) Aromatic vinyl compound-vinyl cyanide compound copolymer having weight average molecular weight of 1,000,000 to 10,000,000 g/mol

The copolymer (D) may have a weight average molecular weight of preferably 3,000,000 to 80,000,000 g/mol, more preferably 4,000,000 to 70,000,000 g/mol, still more preferably 4,000,000 to 50,000,000 g/mol. Within this range, by suppressing occurrence of flow marks, excellent appearance may be realized.

For example, base resin 100 parts by weight, the copolymer (D) may be included in an amount of 0.5 to 4 parts by weight, preferably 0.7 to 3.7 parts by weight, more preferably 0.9 to 3.5 parts by weight, still more preferably 0.9 to 3.2 parts by weight, still more preferably 1 to 3 parts by weight. Within this range, fluidity may be excellent, and excellent appearance may be realized by suppressing occurrence of flow marks.

For example, the copolymer (D) may be a cross-linked aromatic vinyl compound-vinyl cyanide compound copolymer. In this case, impact resistance may be excellent, and occurrence of flow marks may be suppressed.

For example, the cross-linked aromatic vinyl compound-vinyl cyanide compound copolymer may include one or more multifunctional compounds selected from the group consisting of a multifunctional mercaptan-based compound and a multifunctional acrylic monomer in a mixture including an aromatic vinyl compound and a vinyl cyanide compound. In this case, impact resistance may be excellent, and occurrence of flow marks may be suppressed.

As a preferred example, the cross-linked aromatic vinyl compound-vinyl cyanide compound copolymer may include preferably 0.01 to 5 parts by weight of a multifunctional mercaptan-based compound and 0.005 to 5 parts by weight of a multifunctional acrylic monomer based on 100 parts by weight of a mixture including 50 to 90 % by weight of an aromatic vinyl compound and 10 to 50 % by weight of a vinyl cyanide compound, more preferably 0.5 to 3 parts by weight of a multifunctional mercaptan-based compound and 0.05 to 3 parts by weight of a multifunctional acrylic monomer based on 100 parts by weight of a mixture including 60 to 80 % by weight of an aromatic vinyl compound and 20 to 40 % by weight of a vinyl cyanide compound, still more preferably 0.5 to 3 parts by weight of a multifunctional mercaptan-based compound and 0.05 to 3 parts by weight of a multifunctional acrylic monomer based on 100 parts by weight of a mixture including 70 to 75 % by weight of an aromatic vinyl compound and 20 to 30 % by weight of a vinyl cyanide compound. In this case, due to excellent fluidity and die swell ratio, occurrence of flow marks may be suppressed.

As another preferred example, based on 100 parts by weight of a mixture including 50 to 90 % by weight of an aromatic vinyl compound and 10 to 50 % by weight of a vinyl cyanide compound, the copolymer (D) may include 0.01 to 5 parts by weight of a multifunctional mercaptan-based compound. In this case, due to excellent fluidity and die swell ratio, occurrence of flow marks may be suppressed.

As another preferred example, based on 100 parts by weight of a mixture including 50 to 90 % by weight of an aromatic vinyl compound and 10 to 50 % by weight of a vinyl cyanide compound, the copolymer (D) may include 0.005 to 5 parts by weight of a multifunctional acrylic monomer. In this case, due to excellent fluidity and die swell ratio, occurrence of flow marks may be suppressed.

The types of the aromatic vinyl compound and the vinyl cyanide compound included in the copolymer (D) may be the same as the types of the aromatic vinyl compound and the vinyl cyanide compound included in the graft copolymer (A-1) of the present invention.

For example, the multifunctional mercaptan-based compound may include one or more selected from the group consisting of trimethylpropane tri(3-mercaptopropionate), trimethylpropane tri(3-mercaptoacetate), trimethylpropane tri(4-mercaptobutanate), trimethylpropane tri(5-mercaptopentanate), trimethylpropane tri(6-mercaptohexaonate), pentaerythril tetrakis(2-mercaptoacetate), pentaerythril tetrakis(3-mercaptopropionate), pentaerythril tetrakis(4-mercaptobutanate), pentaerythril tetrakis(5-mercaptopentanate), and pentaerythril tetrakis(6-mercaptohexanate) .

For example, the multifunctional acrylic monomer may include one or more selected from the group consisting of ethylene dimethacrylate, diethylene glycol methacrylate, trimethylenepropane trimethacrylate, 1,3-butanediol methacrylate, 1,6-hexanediol dimethacrylate, and allyl acrylate.

The copolymer (D) may be prepared by emulsion polymerization, bulk polymerization, or suspension polymerization, preferably emulsion polymerization. In this case, an ultra-high molecular weight resin may be prepared uniformly.

**Thermoplastic resin composition**

For example, in the thermoplastic resin composition, when the weights of (A-1), (A-2), (B), and (C) are a, b, c, and d, respectively, a, b, c, and d may satisfy Equation 1 below. In this case, due to excellent fluidity and die swell ratio, occurrence of flow marks may be suppressed.

$$[Equation\ 1]$$

$$a \leq d < b \leq c$$

Here, a may be an integer of 5 to 20, an integer of 7 to 20, an integer of 7 to 15, or an integer of 7 to 12.
Here, b may be an integer of 26 to 35, an integer of 28 to 35, an integer of 26 to 32, or an integer of 28 to 32.
Here, c may be an integer of 35 to 60, an integer of 35 to 55, an integer of 38 to 55, or an integer of 38 to 52.
Here, d may be an integer of 6 to 25, an integer of 8 to 25, an integer of 6 to 20, an integer of 8 to 20, or an integer of 8 to 15.
As a specific example, the thermoplastic resin composition may satisfy Equation 1-1 below. In this case, excellent physical property balance may be realized, and excellent appearance may be realized by preventing occurrence of flow marks.

$$[Equation\ 1-1]$$

$$a < d < b < c$$

Here, a may be an integer of 5 to 20, an integer of 7 to 20, an integer of 7 to 15, or an integer of 7 to 12.
Here, b may be an integer of 26 to 35, an integer of 28 to 35, an integer of 26 to 32, or an integer of 28 to 32.
Here, c may be an integer of 35 to 60, an integer of 35 to 55, an integer of 38 to 55, or an integer of 38 to 52.
Here, d may be an integer of 6 to 25, an integer of 8 to 25, an integer of 6 to 20, an integer of 8 to 20, or an integer of 8 to 15.
For example, in the thermoplastic resin composition, when the weights of (A-1), (A-2), (B), and (C) are a, b, c, and d, respectively, a, b, c, and d may satisfy Equation 2 below. In this case, due to excellent fluidity and die swell ratio, occurrence of flow marks may be suppressed.

$$[Equation\ 2]$$

$$0.3 \leq [(a+b)\ /\ (c+d)] < 0.8$$

Here, a may be an integer of 5 to 20, an integer of 7 to 20, an integer of 7 to 15, or an integer of 7 to 12.
Here, b may be an integer of 26 to 35, an integer of 28 to 35, an integer of 26 to 32, or an integer of 28 to 32.
Here, c may be an integer of 35 to 60, an integer of 35 to 55, an integer of 38 to 55, or an integer of 38 to 52.
Here, d may be an integer of 6 to 25, an integer of 8 to 25, an integer of 6 to 20, an integer of 8 to 20, or an integer of 8 to 15.
As a specific example, the thermoplastic resin composition may satisfy Equation 2-1 below. In this case, excellent physical property balance may be realized, and excellent appearance may be realized by preventing occurrence of flow marks.

$$[Equation\ 2-1]$$

$$0.3 \leq [(a+b)\ /\ (c+d)] \leq 0.75$$

Here, a may be an integer of 5 to 20, an integer of 7 to 20, an integer of 7 to 15, or an integer of 7 to 12.
Here, b may be an integer of 26 to 35, an integer of 28 to 35, an integer of 26 to 32, or an integer of 28 to 32.
Here, c may be an integer of 35 to 60, an integer of 35 to 55, an integer of 38 to 55, or an integer of 38 to 52.

Here, d may be an integer of 6 to 25, an integer of 8 to 25, an integer of 6 to 20, an integer of 8 to 20, or an integer of 8 to 15.

As a preferred example, the thermoplastic resin composition may satisfy Equation 2-2 below. In this case, excellent physical property balance may be realized, and excellent appearance may be realized by preventing occurrence of flow marks.

$$[\text{Equation 2-2}]$$

$$0.3 \leq [(a+b) / (c+d)] \leq 0.7$$

Here, a may be an integer of 5 to 20, an integer of 7 to 20, an integer of 7 to 15, or an integer of 7 to 12.

Here, b may be an integer of 26 to 35, an integer of 28 to 35, an integer of 26 to 32, or an integer of 28 to 32.

Here, c may be an integer of 35 to 60, an integer of 35 to 55, an integer of 38 to 55, or an integer of 38 to 52.

Here, d may be an integer of 6 to 25, an integer of 8 to 25, an integer of 6 to 20, an integer of 8 to 20, or an integer of 8 to 15.

When the thermoplastic resin composition of the present invention satisfies both Equations 1 and 2, the thermoplastic resin composition may have fluidity and weather resistance equal or similar to those of conventional ASA resin compositions. In addition, due to excellent die swell ratio, occurrence of flow marks may be suppressed.

When the thermoplastic resin composition of the present invention satisfies Equation 3 below, the thermoplastic resin composition may have fluidity and weather resistance equal or similar to those of conventional ASA resin compositions. In addition, due to excellent die swell ratio, occurrence of flow marks may be suppressed.

$$380 \leq \text{melt flow index} \times \text{die swell ratio} \times \text{spiral} \times \text{content of processing aid} \leq 1{,}400 \qquad \text{[Equation 3]}$$

In Equation 3, the melt flow index is a value (unit: g/10 min) measured at 220 °C under a load of 10 kg for the thermoplastic resin composition, the die swell ratio is a value calculated by Equation 4 below, the spiral is a length (unit: cm) of a specimen obtained by injection at an injection temperature of 300 °C and a mold temperature of 80 °C under a pressure of 500 Kgf using a spiral mold (2.0T) and an injection molding machine (Victory 80, Engel Co.), and the content of processing aid is an amount (parts by weight) of the copolymer (D) based on 100 parts by weight in total of the base resin and the aromatic vinyl compound-vinyl cyanide compound copolymer.

$$[\text{Equation 4}]$$

$$\text{Die swell ratio} = D_{ex} / D_0$$

In Equation 4, $D_0$ is a die diameter of 2 mm, and $D_{ex}$ is a diameter (unit: mm) of a specimen obtained by extrusion at 220 °C under a load of 10 kg using a melt indexer (MI) having a die diameter ($D_0$) of 2 mm.

Equation 3 may preferably satisfy the range of 400 to 1,300. In this case, fluidity and weather resistance may be excellent, occurrence of flow marks may be suppressed, and excellent appearance may be realized.

For example, when the diameter ($D_{ex}$) of a specimen obtained by extrusion at 220 °C under a load of 10 kg using a melt indexer (MI) having a die diameter ($D_0$) of 2 mm is measured, and die swell ratio is calculated by Equation 4, the thermoplastic resin composition may have a die swell ratio of 1.3 to 1.57, preferably 1.3 to 1.55, more preferably 1.3 to 1.54. Within this range, impact resistance and fluidity may be excellent, occurrence of flow marks may be suppressed, and excellent appearance may be realized.

For example, when the spiral length of a specimen obtained by injection at an injection temperature of 300 °C and a mold temperature of 80 °C under a pressure of 500 Kgf using a spiral mold (2.0T) and an injection molding machine (Victory 80, Engel Co.) is measured, the thermoplastic resin composition may have a spiral length of 21.1 cm or more, preferably 21.1 to 24.4 cm. Within this range, excellent physical property balance may be realized, and excellent appearance may be realized by preventing occurrence of flow marks.

For example, the thermoplastic resin composition may have a melt flow index of 6.7 g/10 min or more, preferably 6.7 to 13.2 g/10 min as measured at 220 °C under a load of 10 kg for 10 minutes according to ASTM D1238. Within this range, excellent physical property balance may be realized, and excellent appearance may be realized by preventing occurrence of flow marks.

For example, the thermoplastic resin composition may have a Charpy impact strength of 9 kJ/m$^2$ or more, preferably 10 kJ/m$^2$ or more, more preferably 10 to 15 kJ/m$^2$, still more preferably 10.5 to 13 kJ/m$^2$ as measured at 23 °C using a specimen having a thickness of 4 mm according to ISO 179. Within this range, excellent physical property balance may be realized, and excellent appearance may be realized by preventing occurrence of flow marks.

For example, when a specimen having a size of 40 mm $\times$ 200 mm is obtained by injecting the thermoplastic resin composition at an injection temperature of 240 °C, a holding pressure of 50 bar, and an injection speed of 80 mm/s using an injection machine (120MT, Engel Co.), no flow marks occur on the surface of the specimen. In this case, physical property balance may be excellent, and appearance may be improved.

According to another embodiment of the present invention, the thermoplastic resin composition includes 100 parts by weight of a base resin including 5 to 20 % by weight of an acrylate-aromatic vinyl compound-vinyl cyanide compound graft copolymer (A-1) containing acrylate rubber having an average particle diameter of 400 to 600 nm, 20 to 40 % by weight of an acrylate-aromatic vinyl compound-vinyl cyanide compound graft copolymer (A-2) containing acrylate rubber having an average particle diameter of 30 to 200 nm, 30 to 60 % by weight of a heat-resistant resin (B) having a weight average molecular weight of 50,000 to 150,000 g/mol, and 5 to 30 % by weight of an aromatic vinyl compound-vinyl cyanide compound copolymer (C) having a weight average molecular weight of 50,000 to 70,000 g/mol; and 0.5 to 4 parts by weight of an aromatic vinyl compound-vinyl cyanide compound copolymer (D) having a weight average molecular weight of 1,000,000 to 10,000,000 g/mol. In this case, the base resin may include (A-1), (A-2), (B), and (C) in a weight ratio of 1:2 to 3:4 to 5:1 to 2 ((A-1):(A-2):(B):(C)).

For example, the thermoplastic resin composition may further include one or more additives selected from the group consisting of a lubricant, an antioxidant, a UV stabilizer, a fluorescent brightening agent, a chain extender, a pigment, a dye, an antibacterial agent, a processing aid, a metal deactivator, a smoke suppressant, an inorganic filler, glass fiber, an anti-friction agent, and an anti-wear agent. At this time, based on 100 parts by weight of the base resin, each additive may be included in an amount of 0.01 to 5 parts by weight, preferably 0.05 to 3 parts by weight, more preferably 0.1 to 3 parts by weight. In this case, required physical properties may be effectively expressed without deteriorating the intrinsic physical properties of the thermoplastic resin composition of the present invention.

## Method of preparing thermoplastic resin composition

For example, a method of preparing a thermoplastic resin composition according to the present invention includes a step of kneading and extruding, at 200 to 300 °C and 100 to 500 rpm, 100 parts by weight of a base resin including 5 to 20 % by weight of an acrylate-aromatic vinyl compound-vinyl cyanide compound graft copolymer (A-1) containing acrylate rubber having an average particle diameter of 400 to 600 nm, 20 to 40 % by weight of an acrylate-aromatic vinyl compound-vinyl cyanide compound graft copolymer (A-2) containing acrylate rubber having an average particle diameter of 30 to 200 nm, 30 to 60 % by weight of a heat-resistant resin (B) having a weight average molecular weight of 50,000 to 150,000 g/mol, and 5 to 30 % by weight of an aromatic vinyl compound-vinyl cyanide compound copolymer (C) having a weight average molecular weight of 50,000 to 70,000 g/mol; and 0.5 to 4 parts by weight of an aromatic vinyl compound-vinyl cyanide compound copolymer (D) having a weight average molecular weight of 1,000,000 to 10,000,000 g/mol. In this case, fluidity and weather resistance equal or superior to those of conventional ASA resin compositions may be implemented. In addition, due to excellent die swell ratio, occurrence of flow marks may be suppressed, and excellent appearance may be realized.

The method of preparing a thermoplastic resin composition shares all the technical characteristics of the above-described thermoplastic resin composition. Accordingly, repeated description thereof will be omitted.

The step of preparing pellets using an extrusion kneader may be preferably performed at 200 to 300 °C in $\Phi$ 25 to 75, more preferably at 210 to 260 °C $\phi$ 20 to 70. Within this range, extrusion may be performed stably, and an excellent kneading effect may be obtained. In this case, the temperature is the set temperature of a cylinder, and $\phi$ means the outer diameter (unit: mm).

Extrusion kneaders commonly used in the art to which the present invention pertains may be used without particular limitation, and a twin-screw extrusion kneader is preferably used.

## Molded article

For example, a molded article of the present invention includes the thermoplastic resin composition of the present invention. In this case, fluidity and weather resistance equal or superior to those of conventional ASA resin compositions may be implemented, and excellent appearance may be realized by suppressing occurrence of flow marks.

A method of manufacturing a molded article according to the preset invention includes a step of injecting pellets of the thermoplastic resin composition at an injection temperature of 200 to 300 °C, an injection pressure of 60 to 100 bar, and a holding pressure of 30 to 65 bar. In this case, an injection-molded article having high impact strength may be easily manufactured.

The injection temperature may be preferably 220 to 280 °C, more preferably 230 to 270 °C. Within this range, an injection-molded article having a complex design may be easily manufactured.

The injection pressure may be preferably 70 to 90 bar, more preferably 75 to 85 bar. Within this range, an injection-molded article having a complex design may be easily manufactured.

The holding pressure may be preferably 35 to 60 bar, more preferably 40 to 55 bar. Within this range, an injection-molded article having a complex design may be easily manufactured.

The molded article may be used for automotive exterior materials including side mirror housings, radiator grills, and filters.

In describing the thermoplastic resin composition of the present invention, the method of preparing the same, and the molded article including the same, it should be noted that other conditions or equipment not explicitly described herein may be appropriately selected within the range commonly practiced in the art without particular limitation.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

**[Examples]**

Materials used in Examples and Comparative Examples below are as follows.

* (A-1) Graft copolymer: An ASA graft copolymer (Product name: D927, LG Chemical Co.) including 50 % by weight of acrylate rubber having an average particle diameter of 300 to 600 nm, 13 % by weight of acrylonitrile, and 37 % by weight of styrene

* (A-2) Graft copolymer: An ASA graft copolymer (Product name: D100, LG Chemical Co.) including acrylate rubber having an average particle diameter of 30 to 200 nm

* (A-3) Graft copolymer: An ASA graft copolymer (Product name: D928, LG Chemical Co.) including 40 % by weight of acrylate rubber having an average particle diameter of 300 to 600 nm, 15 % by weight of acrylonitrile, and 45 % by weight of styrene

* (B) Heat-resistant resin (a-methyl styrene: 71 % by weight, acrylonitrile: 29 % by weight, weight average molecular weight: 80,000 to 100,000 g/mol, bulk polymerization heat-resistant SAN resin, product name: 200UH, LG Chemical Co.)

* (C-1) Aromatic vinyl compound-vinyl cyanide compound copolymer (Weight average molecular weight: 60,000 g/mol, suspension polymerization branched SAN resin (long-chain branched SAN), product name: EMI-200, Find Blend Co.)

* (C-2) Aromatic vinyl compound-vinyl cyanide compound copolymer (Weight average molecular weight: 80,000 to 120,000 g/mol, product name: S95RF, LG Chemical Co.)

* (D) Ultra-high molecular weight SAN resin: A styrene-acrylonitrile copolymer (Product name: ZB-869, Zibo Huaxing Additives Co.) including 75 % by weight of styrene and 25 % by weight of acrylonitrile and having a weight average molecular weight of 2,000,000 to 5,000,000 g/mol

Examples 1 to 3 and Comparative Examples 1 to 8

According to the contents shown in Tables 1 and 2, the components shown in Tables 1 and 2 were introduced into a twin-screw extruder, and kneading and extrusion were performed at a cylinder temperature of 240 °C to prepare pellets. Using the prepared pellets, melt flow index was measured. As additives, 0.3 % by weight of a lubricant and 0.3 % by weight of an UV stabilizer were added.

Then, using an injection machine (Engel Co., 120MT), the pellets were injected at an injection temperature of 250 °C to obtain a specimen for measuring physical properties.

[Test Examples]

The properties of the specimens prepared in Examples 1 to 3 and Comparative Examples 1 to 8 were measured by the following methods, and the results are shown in Tables 1 and 2 and FIG. 1.

Measurement methods

* Melt flow index (g/10 min): Melt flow index was measured at 220 °C under a load of 10 kg for 10 minutes according to ASTM D1238.

* Charpy impact strength (kJ/m$^2$): Charpy impact strength was measured at 23 °C using a specimen having a thickness of 4 mm according to ISO 179.

* Die swell ratio: The diameter ($D_{ex}$) of a specimen obtained by extrusion at 220 °C under a load of 10 kg using a melt indexer (MI) having a die diameter ($D_0$) of 2 mm was measured, and die swell ratio was calculated by Equation 4 below.

$$[Equation\ 4]$$

$$Die\ swell\ ratio = D_{ex}\ /\ D_0$$

In Equation 1, $D_{ex}$ is the diameter (mm) of an extruded sample, and $D_0$ is a die diameter (mm).

* Spiral (unit: cm): The length of a specimen obtained by injection at an injection temperature of 250 °C and a mold temperature of 60 °C under a pressure of 500 Kgf using a spiral mold (1.5T) and an injection molding machine (Victory 80, Engel Co.) was measured.

* Whether flow marks occur: A specimen having a size of 40 mm × 200 mm was obtained by injection at an injection temperature of 250 °C, a holding pressure of 50 bar, and an injection speed of 90 mm/s using an injection machine (120MT, Engel Co.). Then, whether flow marks occur on the surface of the specimen was visually observed, and the degree of occurrence of flow marks was evaluated as follows. For reference, flow marks appear as V-shaped wave patterns.

X: No flow marks are observed on the surface.

Δ: Fine flow marks are observed on the surface.

○: Flow marks are observed intermittently.

◎: A large number of flow marks are observed on the surface.

* Flow mark parameters: When the weights of (A-1), (A-2), (B), and (C) were a, b, c, and d, respectively, it was determined whether Equation 1 below was satisfied. When Equation 1 was satisfied, it was indicated as o. When Equation 1 was not satisfied, it was indicated as X. For reference, the mark "o" is related to suppression of occurrence of flow marks.

$$[Equation\ 1]$$

$$a \leq d < b \leq c$$

* Appearance quality parameters: The values calculated by Equation 3 below are shown in Tables 1 and 2 below. For reference, when the value is within a range of 380 to 1,400, physical property balance and appearance are judged to be excellent.

$$380 \leq melt\ flow\ index \times die\ swell\ ratio \times spiral \times content\ of\ processing\ aid \leq 1,400 \qquad [Equation\ 3]$$

[Table 1]

| Classification | Example 1 | Example 2 | Example 3 |
|---|---|---|---|
| (A-1) Graft copolymer (a) | 10 | 10 | 10 |
| (A-2) Graft copolymer (b) | 30 | 30 | 30 |
| (A-3) Graft copolymer | - | - | - |
| (B) Heat-resistant SAN resin (c) | 40 | 50 | 40 |
| (C-1) SAN resin (d) | 20 | 10 | 20 |
| (C-2) SAN resin (d) | - | - | - |

(continued)

| Classification | Example 1 | Example 2 | Example 3 |
|---|---|---|---|
| (D) Ultra-high molecular weight SAN resin | 1 | 3 | 3 |
| Melt flow index | 13.2 | 6.7 | 10.4 |
| Die swell ratio | 1.31 | 1.46 | 1.54 |
| Spiral | 24.4 | 21.1 | 23.3 |
| Whether flow marks occur | X | X | X |
| Whether Equation 1 is satisfied | ○ | ○ | ○ |
| Value calculated by Equation 3 | 421 | 619 | 1119 |

[Table 2]

| Classification | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|
| (A-1) Graft copolymer (a) | 10 | 10 | 10 | 10 | 10 | 10 | 10 | 10 |
| (A-2) Graft copolymer (b) | 30 | 30 | 30 | 30 | 30 | 30 | - | 30 |
| (A-3) Graft copolymer (b) | - | - | - | - | - | - | 30 | - |
| (B) Heat-resistant SAN resin (c) | 60 | 50 | 40 | 60 | 60 | 40 | 40 | 40 |
| (C-1) SAN resin (d) | - | 10 | 20 | - | - | - | 20 | 20 |
| (C-2) SAN resin (d) | - | - | - | - | - | 20 | - | - |
| (D) Ultra-high molecular weight SAN resin | - | - | - | 1 | 3 | 1 | 1 | 5 |
| Melt flow index | 5.3 | 8.6 | 14.6 | 5.0 | 4.4 | 10.0 | 15.0 | 7.4 |
| Die swell ratio | 1.26 | 1.24 | 1.24 | 1.30 | 1.38 | 1.25 | 1.26 | 1.64 |
| Spiral | 20.5 | 22.7 | 25.7 | 20.1 | 18.9 | 23.1 | 25.9 | 20.7 |
| Whether flow marks occur | ◎ | ◎ | ○ | ○ | Δ | ○ | ○ | x |
| Whether Equation 1 is satisfied | X | ○ | ○ | X | X | ○ | ○ | ○ |
| Value calculated by Equation 3 | 0 | 0 | 0 | 130.65 | 344.28 | 288.75 | 489.51 | 1256 |

In Tables 1 and 2, the content of each of (A-1), (A-2), (A-3), (B), (C-1), and (C-2) is given in % by weight based on a total weight thereof, and the content of (D) is given in parts by weights based on 100 parts by weight in total of (A-1), (A-2), (A-3), (B), (C-1), and (C-2).

As shown in Tables 1 and 2, Examples 1 to 3 according to the present invention exhibited Charpy impact strength equal to or higher than that of Comparative Examples 1 to 9. In addition, in the case of Examples 1 to 3, melt flow index and die swell ratio were excellent, and occurrence of flow marks was not observed. In addition, Examples 1 to 3 satisfied the appropriate ranges of Equations 1 and 3.

Specifically, in the case of Comparative Example 1 not including the SAN resin (C) and the ultra-high molecular weight SAN resin (D), due to low melt flow index, processability was poor. In addition, die swell ratio and spiral length were small, a large number of flow marks were observed, and the appropriate ranges of Equations 1 and 3 were not satisfied.

In addition, in the case of Comparative Examples 2 and 3 not including the ultra-high molecular weight SAN resin (D), die swell ratio was small. In addition, flow marks were observed intermittently or a large number of flow marks were observed depending on the amount of the SAN resin (C) used, and the appropriate range of Equation 3 was not satisfied.

In addition, in the case of Comparative Examples 4 and 5 not including the SAN resin (C), processability was poor due to low melt flow index, spiral length was slightly reduced, fine flow marks occurred or flow marks occurred intermittently depending on the amount of the ultra-high molecular weight SAN resin (D) used, and the appropriate ranges of Equations 1 and 3 were not satisfied.

In addition, in the case of Comparative Example 6 including the SAN resin (C) having a molecular weight outside the appropriate range, flow marks occurred due to low die swell ratio, and the appropriate range of Equation 3 was not satisfied.

In addition, in the case of Comparative Example 7 including the graft copolymer (A) containing rubber having a medium diameter larger than a small diameter, the die swell ratio was reduced, and the spiral length was out of 24.4 cm, resulting in poor injection moldability. In addition, the appropriate range of Equation 3 was not satisfied.

In addition, in the case of Comparative Example 8 including an excess of the ultra-high molecular weight SAN resin (D), the spiral length was reduced, and the appropriate range of Equation 3 was not satisfied.

FIG. 1 below shows whether flow marks occur on the specimens of Example 1 and Comparative Examples 1, 3, and 5. As shown in FIG. 1, flow marks are not observed on the specimen of Example 1, indicating that the specimen of Example 1 has excellent appearance.

In contrast, in the case of Comparative Examples 1, 3, and 5, a large number of wavy flow marks are observed on the specimens, indicating that the specimens of Comparative Examples 1, 3, and 5 have poor appearance.

In summary, by adjusting the die swell ratio of a five-component thermoplastic resin composition including graft copolymers containing acrylate rubbers having different average particle diameters, a heat-resistant resin, and thermoplastic copolymers in different molecular weight ranges, due to the synergistic effect of these components, excellent fluidity and weather resistance may be obtained. In addition, occurrence of flow marks may be suppressed, thereby improving appearance quality. Accordingly, the thermoplastic resin composition of the present invention may be used to manufacture an exterior material having excellent reliability.

**Claims**

1. A thermoplastic resin composition, comprising:

   100 parts by weight of a base resin comprising an acrylate-aromatic vinyl compound-vinyl cyanide compound graft copolymer (A-1) containing acrylate rubber having an average particle diameter of 400 to 600 nm, an acrylate-aromatic vinyl compound-vinyl cyanide compound graft copolymer (A-2) containing acrylate rubber having an average particle diameter of 30 to 200 nm, a heat-resistant resin (B) having a weight average molecular weight of 50,000 to 150,000 g/mol, and an aromatic vinyl compound-vinyl cyanide compound copolymer (C) having a weight average molecular weight of 50,000 to 70,000 g/mol; and
   0.5 to 4 parts by weight of an aromatic vinyl compound-vinyl cyanide compound copolymer (D) having a weight average molecular weight of 1,000,000 to 10,000,000 g/mol.

2. The thermoplastic resin composition according to claim 1, wherein, when weights of (A-1), (A-2), (B), and (C) are a, b, c, and d, respectively, a, b, c, and d satisfy Equation 1 below:

[Equation 1]

```
a ≤ d < b ≤ c,
```

wherein a is an integer from 5 to 20, b is an integer from 26 to 40, c is an integer from 30 to 60, and d is an integer from 6 to 25.

3. The thermoplastic resin composition according to claim 1, wherein the base resin comprises (A-1), (A-2), (B), and (C) in a weight ratio of 1:2 to 3:4 to 5:1 to 2 ((A-1) : (A-2):(B):(C)).

4. The thermoplastic resin composition according to claim 1, wherein the aromatic vinyl compound-vinyl cyanide compound copolymer (D) has an intrinsic viscosity (I.V., 25 °C) of 10 dL/g or more, a bulk density of 0.1 to 0.5 g/cm$^3$, and a weight average molecular weight of greater than 1,000,000 g/mol.

5. The thermoplastic resin composition according to claim 4, wherein the aromatic vinyl compound-vinyl cyanide compound copolymer (D) is a copolymer comprising 50 to 90 % by weight of an aromatic vinyl compound and 10 to 50 % by weight of a vinyl cyanide compound.

6. The thermoplastic resin composition according to claim 1, wherein, based on 100 % by weight in total of all components constituting the base resin, a total amount of (A-1) and (A-2) is 40 % by weight or less.

7. The thermoplastic resin composition according to claim 1, wherein the heat-resistant resin (B) comprises 60 to 80 % by weight of an $\alpha$-methyl styrene-based monomer and 20 to 40 % by weight of a vinyl cyanide compound.

8. The thermoplastic resin composition according to claim 1, wherein, based on 100 % by weight in total of the acrylate-aromatic vinyl compound-vinyl cyanide compound graft copolymer (A-1), the acrylate-aromatic vinyl compound-vinyl cyanide compound graft copolymer (A-1) comprises 40 to 60 % by weight of acrylate rubber, 25 to 45 % by weight of an aromatic vinyl compound, and 5 to 20 % by weight of a vinyl cyanide compound.

9. The thermoplastic resin composition according to claim 1, wherein, based on 100 % by weight in total of the acrylate-aromatic vinyl compound-vinyl cyanide compound graft copolymer (A-2), the acrylate-aromatic vinyl compound-vinyl cyanide compound graft copolymer (A-2) comprises 40 to 60 % by weight of acrylate rubber, 25 to 45 % by weight of an aromatic vinyl compound, and 5 to 20 % by weight of a vinyl cyanide compound.

10. The thermoplastic resin composition according to claim 1, wherein the aromatic vinyl compound-vinyl cyanide compound copolymer (C) comprises 50 to 90 % by weight of an aromatic vinyl compound and 10 to 50 % by weight of a vinyl cyanide compound.

11. A thermoplastic resin composition, comprising:

100 parts by weight of a base resin comprising 5 to 20 % by weight of an acrylate-aromatic vinyl compound-vinyl cyanide compound graft copolymer (A-1) containing acrylate rubber having an average particle diameter of 400 to 600 nm, 20 to 40 % by weight of an acrylate-aromatic vinyl compound-vinyl cyanide compound graft copolymer (A-2) containing acrylate rubber having an average particle diameter of 30 to 200 nm, 30 to 60 % by weight of a heat-resistant resin (B) having a weight average molecular weight of 50,000 to 150,000 g/mol, and 5 to 30 % by weight of an aromatic vinyl compound-vinyl cyanide compound copolymer (C) having a weight average molecular weight of 50,000 to 70,000 g/mol; and
0.5 to 4 parts by weight of an aromatic vinyl compound-vinyl cyanide compound copolymer (D) having a weight average molecular weight of 1,000,000 to 10,000,000 g/mol,
wherein the base resin comprises (A-1), (A-2), (B), and (C) in a weight ratio of 1:2 to 3:4 to 5:1 to 2 ((A-1):(A-2) : (B) : (C)) .

12. The thermoplastic resin composition according to claim 1 or 11, wherein the thermoplastic resin composition satisfies Equation 3 below:

$$380 \leq \text{melt flow index} \times \text{die swell ratio} \times \text{spiral} \times \text{content of processing aid} \leq 1{,}400 \qquad \text{[Equation 3]}$$

wherein the melt flow index is a value (unit: g/10 min) measured at 220 °C under a load of 10 kg according to ASTM D1238 for the thermoplastic resin composition, the die swell ratio is a value calculated by Equation 4 below, the spiral is a length (unit: cm) of a specimen obtained by injection at an injection temperature of 300 °C and a mold temperature of 80 °C under a pressure of 500 Kgf using a spiral mold (2.0T) and an injection molding machine (Victory 80, Engel Co.), and the content of processing aid is an amount (parts by weight) of the copolymer (D) based on 100 parts by weight in total of the base resin and the aromatic vinyl compound-vinyl cyanide compound copolymer.

$$[\text{Equation 4}]$$

$$\text{Die swell ratio} = D_{ex} / D_0,$$

wherein $D_0$ is a die diameter of 2 mm, and $D_{ex}$ is a diameter (unit: mm) of a specimen obtained by extrusion at 220 °C under a load of 10 kg using a melt indexer (MI) having a die diameter ($D_0$) of 2 mm.

13. The thermoplastic resin composition according to claim 12, wherein Equation 3 satisfies a range of 400 to 1,300, the melt flow index is 6.7 to 13.2 g/10 min, the die swell ratio is 1.31 to 1.54, and the spiral is 21.1 to 24.4 cm.

14. A method of preparing a thermoplastic resin composition, comprising kneading and extruding, at 200 to 300 °C and 100 to 500 rpm, 100 parts by weight of a base resin comprising 5 to 20 % by weight of an acrylate-aromatic vinyl compound-vinyl cyanide compound graft copolymer (A-1) containing acrylate rubber having an average particle diameter of 400 to 600 nm, 20 to 40 % by weight of an acrylate-aromatic vinyl compound-vinyl cyanide compound graft copolymer (A-2) containing acrylate rubber having an average particle diameter of 30 to 200 nm, 30 to 60 % by weight of a heat-resistant resin (B) having a weight average molecular weight of 50,000 to 150,000 g/mol, and 5 to 30 % by weight of an aromatic vinyl compound-vinyl cyanide compound copolymer (C) having a weight average molecular weight of 50,000 to 70,000 g/mol; and 0.5 to 4 parts by weight of an aromatic vinyl compound-vinyl cyanide compound copolymer (D) having a weight average molecular weight of 1,000,000 to 10,000,000 g/mol, wherein the base resin comprises (A-1), (A-2), (B), and (C) in a weight ratio of 1:2 to 3:4 to 5:1 to 2 ((A-1):(A-2) : (B) : (C)).

15. A molded article, comprising the thermoplastic resin composition according to claim 1 or 11.

[FIG. 1]

| EXAMPLE 1 | COMPARATIVE EXAMPLE 5 | COMPARATIVE EXAMPLE 3 | COMPARATIVE EXAMPLE 1 |

OCCURRENCE OF FLOW MARKS

# INTERNATIONAL SEARCH REPORT

| International application No. |
|---|
| **PCT/KR2023/009306** |

| A. | CLASSIFICATION OF SUBJECT MATTER |
|---|---|

**C08L 25/12**(2006.01)i; **C08L 51/04**(2006.01)i

According to International Patent Classification (IPC) or to both national classification and IPC

| B. | FIELDS SEARCHED |
|---|---|

Minimum documentation searched (classification system followed by classification symbols)

C08L 25/12(2006.01); B29C 45/00(2006.01); C08F 257/02(2006.01); C08K 5/00(2006.01); C08K 5/09(2006.01); C08L 23/12(2006.01); C08L 25/16(2006.01); C08L 51/02(2006.01); C08L 51/04(2006.01); C08L 55/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 열가소성 수지(thermoplastic resin), 아크릴레이트-방향족 비닐 화합물-비닐시안 화합물 그라프트 공중합체(acrylate-aromatic vinyl compound-vinyl cyan compound graft copolymer), 방향족 비닐 화합물 -비닐시안 화합물 공중합체(aromatic vinyl compound-vinyl cyan compound copolymer), 중량평균 분자량(weight average molecular weight)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2022-0107757 A (LG CHEM, LTD.) 02 August 2022 (2022-08-02)<br>See paragraphs [0001], [0099], [0128] and [0152]-[0155]; claims 1, 3-4, 8-9 and 11-12; and table 1. | 1-15 |
| Y | KR 10-2022-0114838 A (LG CHEM, LTD.) 17 August 2022 (2022-08-17)<br>See paragraphs [0073] and [0084]; and claims 1 and 4. | 1-15 |
| A | KR 10-2019-0114898 A (LOTTE ADVANCED MATERIALS CO., LTD.) 10 October 2019 (2019-10-10)<br>See entire document. | 1-15 |
| A | KR 10-2018-0035337 A (LOTTE ADVANCED MATERIALS CO., LTD.) 06 April 2018 (2018-04-06)<br>See entire document. | 1-15 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **27 September 2023** | **27 September 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| | International application No. |
|---|---|
| | **PCT/KR2023/009306** |

**C. DOCUMENTS CONSIDERED TO BE RELEVANT**

| Category* | Citation of document, with indication, where appropriate, of the relevant passages | Relevant to claim No. |
|---|---|---|
| A | US 2021-0179839 A1 (LG CHEM, LTD.) 17 June 2021 (2021-06-17)<br>    See entire document. | 1-15 |

Form PCT/ISA/210 (second sheet) (July 2022)

## INTERNATIONAL SEARCH REPORT
### Information on patent family members

International application No.

**PCT/KR2023/009306**

| Patent document cited in search report | | | Publication date (day/month/year) | Patent family member(s) | | | Publication date (day/month/year) |
|---|---|---|---|---|---|---|---|
| KR | 10-2022-0107757 | A | 02 August 2022 | None | | | |
| KR | 10-2022-0114838 | A | 17 August 2022 | None | | | |
| KR | 10-2019-0114898 | A | 10 October 2019 | EP | 3778758 | A1 | 17 February 2021 |
| | | | | EP | 3778758 | A4 | 12 January 2022 |
| | | | | KR | 10-2266583 | B1 | 18 June 2021 |
| | | | | US | 2021-0024735 | A1 | 28 January 2021 |
| | | | | WO | 2019-190298 | A1 | 03 October 2019 |
| KR | 10-2018-0035337 | A | 06 April 2018 | CN | 107880426 | A | 06 April 2018 |
| | | | | CN | 107880426 | B | 27 October 2020 |
| | | | | KR | 10-1965480 | B1 | 03 April 2019 |
| | | | | US | 10479885 | B2 | 19 November 2019 |
| | | | | US | 2018-0086906 | A1 | 29 March 2018 |
| US | 2021-0179839 | A1 | 17 June 2021 | CN | 109819656 | A | 28 May 2019 |
| | | | | CN | 109819656 | B | 13 August 2021 |
| | | | | EP | 3480252 | A1 | 08 May 2019 |
| | | | | EP | 3480252 | A4 | 31 July 2019 |
| | | | | EP | 3480252 | B1 | 01 September 2021 |
| | | | | KR | 10-2019-0031896 | A | 27 March 2019 |
| | | | | KR | 10-2172092 | B1 | 30 October 2020 |
| | | | | US | 11236224 | B2 | 01 February 2022 |
| | | | | WO | 2019-059452 | A1 | 28 March 2019 |

Form PCT/ISA/210 (patent family annex) (July 2022)

**EP 4 378 996 A1**

**REFERENCES CITED IN THE DESCRIPTION**

**Patent documents cited in the description**

- KR 1020220131044
- KR 20220000554 A